# EUROPEAN PATENT APPLICATION

(11) **EP 2 124 080 A1**
(43) Date of publication of application: **25.11.2009**
(21) Application number: 08721433.4
(22) Date of filing: 06.03.2008
(51) Int. Cl.: G02B 6/46, G02B 6/44

(54) **OPTICAL WIRING SYSTEM**

(30) Priority: 12.03.2007 JP 2007062406
(71) Applicant: Sumitomo Electric Industries, Ltd., Chuo-ku Osaka-shi Osaka 541-0041 (JP)
(72) Inventor: IMAIZUMI, Tsuyoshi, Yokohama-shi Kanagawa 244-8588 (JP); AIHARA, Katsuyuki, Yokohama-shi Kanagawa 244-8588 (JP); MIYANO, Hiroshi, Yokohama-shi Kanagawa 244-8588 (JP); HAMADA, Masahiro, Yokohama-shi Kanagawa 244-8588 (JP); KISHI, Akio, Komaki-shi Aichi 485-0831 (JP); TERASAWA, Yoshiaki, Gyoda-shi Saitama 361-8604 (JP); OKABE, Keiju, Gyoda-shi Saitama 361-8604 (JP); MIYABAYASHI, Hiroshi, Chigasaki-shi Kanagawa 253-0087 (JP)
(74) Representative: Kreutzer, Ulrich
(86) International application number: PCT/JP2008/054013
(87) International publication number: WO 2008/111472

(57) **Abstract**

An optical access network system for making a connection between a central-office optical cable and a subscriber optical cable is provided, the optical access network system being capable of facilitating the operation of laying optical cable. The optical access network system comprises a connecting optical cable for forming a connection with one or a plurality of the subscriber optical cables, the connecting optical cable being obtained by assembling together a plurality of component cables having the same number of fibers as the one or plurality of subscriber optical cables. This optical access network system preferably further comprises a subscriber enclosure for connecting one of the subscriber cables from among the one or plurality of subscriber optical cables and one of the component cables from among the plurality of component cables of the connecting cable.

## Description

### Technical Field

The present invention relates to a system for implementing an optical access network between a central office and subscribers.

### Background Art

An example of an optical access network system constructed between a central office and subscribers is introduced in "Efforts for R&D in Optical Access Media," NTT GIJUTU Journal, 2006.12, pp. 44-71. The number of fibers in this optical access network system is reduced from the central office to subscribers, and ultimately a single-fiber drop cable is routed to the home of a subscriber. The laying of optical cables in this optical access network system entails simpler wiring and connecting work, which strongly suggests that the total construction expenditure will be minimized.
Non Patent Citation: "Efforts for R&D in Optical Access Media" NTT GIJUTU Journal, 2006.12, pp. 44-71.

### Disclosure of Invention

### Technical Problem

It is an object of the present invention to provide an optical access network system for making a connection between a central-office optical cable and a subscriber optical cable, the optical access network system being capable of facilitating the operation of laying optical cable.

### Technical Solution

In order to achieve the object, there is provided an optical access network system comprising a connecting optical cable for forming a connection with one or a plurality of subscriber optical cables, the connecting optical cable being obtained by assembling together a plurality of component cables having the same number of fibers as the subscriber optical cables. This optical access network system preferably comprises a subscriber enclosure for connecting one of the subscriber cables from among the one or plurality of subscriber optical cables and one of the component cables from among the plurality of component cables of the connecting cable.

In this optical access network system, the connecting optical cable is preferably a cable obtained by assembling together a plurality of single-fiber component cables, and the optical access network system preferably further comprises a first assembled cable between the central-office optical cable and the connecting optical cable, the first assembled cable being obtained by assembling together a plurality of multi-fiber component cables. The optical access network system preferably further comprises an intermediate enclosure for connecting the multi-fiber component cables of the first assembled cable and the single-fiber component cables of the connecting optical cable; and a central-office enclosure for connecting the central-office optical cable and the multi-fiber component cables of the first assembled cable. The multi-fiber component cables are preferably connected to each of an intermediate enclosure and a central-office enclosure, and the single-fiber component cables are preferably connected to each of the intermediate enclosure and the subscriber enclosure.

### Brief Description of Drawings

FIG. 1 is a conceptual diagram showing an embodiment of the optical access network system according to the present invention.

FIG. 2 is a cross-sectional view showing an example of a feeder cable to be connected to the optical access network system of the present invention.

FIG. 3 is a cross-sectional view showing an example of a drop cable to be connected to the optical access network system of the present invention.

FIG. 4 is a perspective view of a branch cable included in the optical access network system of the embodiment.

FIG. 5 is a perspective view of a sub-branch cable included in the optical access network system of the embodiment.

FIG. 6 is a perspective view showing the open state of a feeder point enclosure included in the optical access network system of the embodiment.

FIG. 7 is a perspective view showing the open state of a distribution enclosure included in the optical access network system of the embodiment.

FIG. 8 is a perspective view showing the open state of a dropping enclosure included in the optical access network system of the embodiment.

FIG. 9 is a conceptual diagram showing an example of a conventional optical access network system.

FIG. 10 is a cross-sectional view of a sub-branch cable included in a conventional optical access network system.

FIG. 11 is a conceptual diagram showing a modified example of the optical access network system according to the present invention.

### Explanation of References

1- Optical access network system, 2- Feeder cable (central-office optical cable), 3- Drop cable (subscriber optical cable), 4- Branch cable (first assembled cable), 5- Sub-branch cable (second assembled cable, connecting optical cable), 16- Multi-fiber component cable, 22- Single-fiber component cable, 27- Feeder point enclosure (central-office enclosure), 34- MT connector, 37- Distribution enclosure (intermediate enclosure), 43- MT connector, 44- Single-fiber connector, 46- Dropping enclosure (subscriber enclosure), 50- Single-fiber connector.

### Best Mode for Carrying Out the Invention

An embodiment of the present invention is described below with reference to the drawings. The drawings are used for descriptive purposes and are not intended to limit the scope of the invention. Identical symbols are used for identical portions in the drawings in order to avoid redundant descriptions. The components of the drawings are not necessarily drawn to scale.

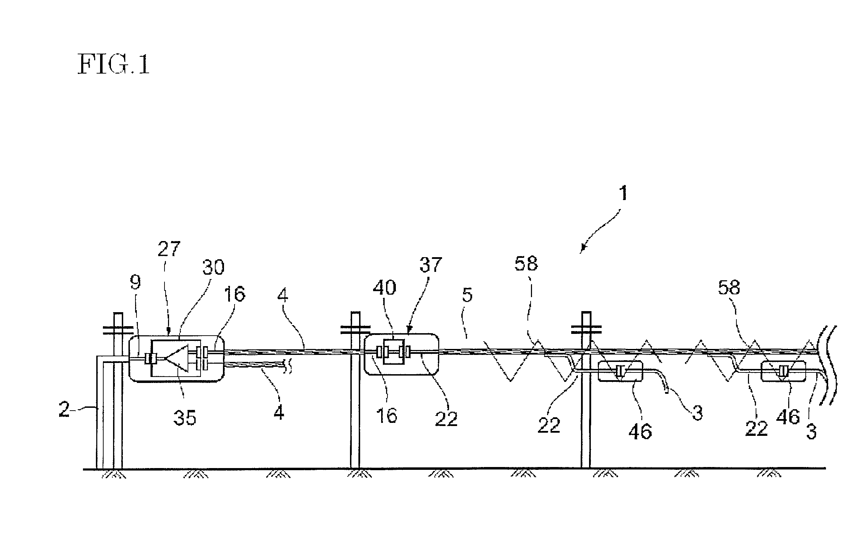

An optical access network system is a system for creating a network of optical fibers between a central-office optical cable and subscriber optical cables. FIG. 1 is a conceptual diagram showing an embodiment of the optical access network system according to the present invention. An optical access network system 1 is provided with branch cables 4 and sub-branch cables 5 which are disposed between a feeder cable 2 (a central-office optical cable) and drop cables 3 (subscriber optical cables). The feeder cable 2 is connected to a transmission apparatus in the central office and is led from underground to overhead. The drop cables 3 extend from the homes of the subscribers.

The feeder cable 2 and the branch cables 4 are connected via a feeder point enclosure 27 at a feeder point. A feeder point is the point where an optical cable rises from underground to overhead. The branch cables 4 and the sub-branch cables 5 are connected via distribution enclosures 37 at distribution points. The sub-branch cables 5 and the drop cables 3 are connected via dropping enclosures 46 at split points (drop points). Strap wires 58 are used to hold the dropping enclosures 46 in the air bundled together with the sub-branch cables 5.

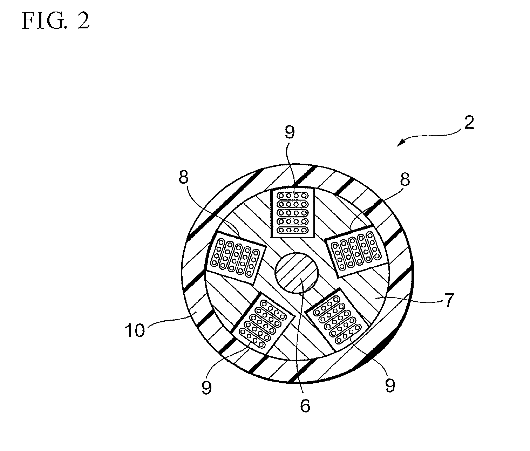

FIG. 2 is a cross-sectional view showing an example of a feeder cable to be connected to the optical access network system of the present invention. The feeder cable 2 has a spacer 7 provided with a tension member 6 in the central part. A plurality of helical slots 8 (five in the present embodiment) are formed in the spacer 7. A plurality of four-fiber optical fiber ribbons (called simply four-fiber ribbons; five are provided in the present embodiment) 9 are positioned in each of the slots 8. The spacer 7 is covered by a protective cable sheath 10 formed from polyethylene (PE).

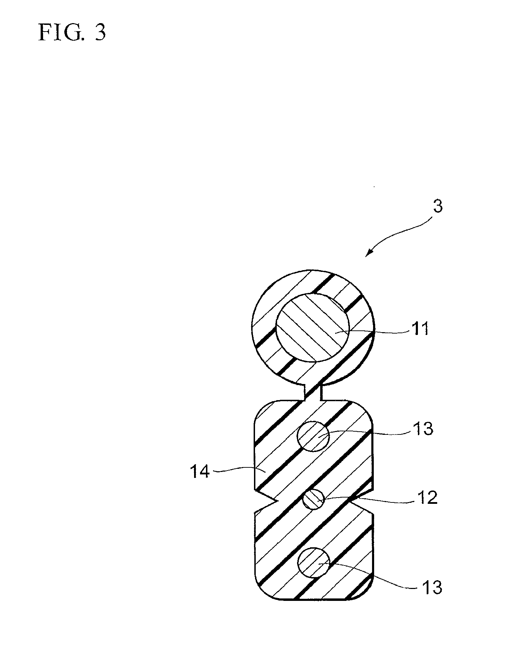

FIG. 3 is a cross-sectional view showing an example of a drop cable to be connected to the optical access network system of the present invention. The drop cable 3 has a support line 11, a single optical fiber 12, and a pair of tension members 13, which are positioned on either side of the optical fiber 12. The support line 11, the optical fiber 12, and the tension members 13 are all covered by a sheath 14 composed of PE.

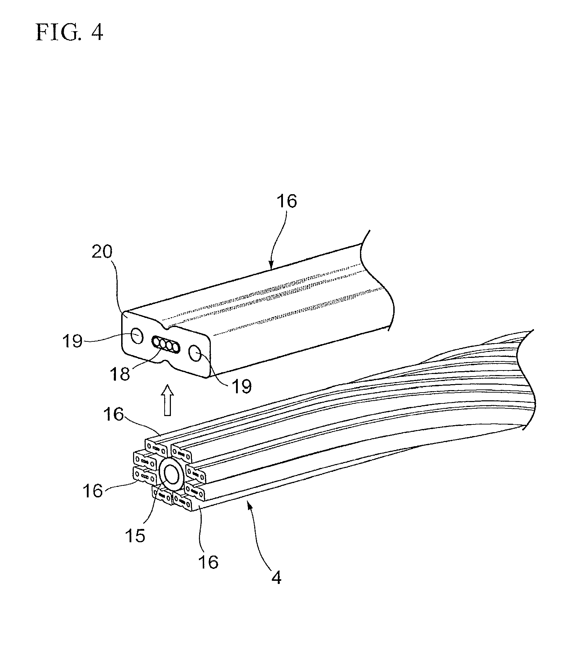

FIG. 4 is a perspective view of a branch cable included in the optical access network system of the embodiment. The branch cable 4 is a cable (first assembled cable) obtained by twisting together a plurality of multi-fiber component cables 16 (eight in the present embodiment) around a support line 15. The multi-fiber component cables 16 in the branch cable 4 are in an exposed (bare) state and are not covered by a cable sheath. The multi-fiber component cables 16 have a four-fiber ribbon 18 and a pair of tension members 19 that are positioned on either side of the four-fiber ribbon 18. The four-fiber ribbon 18 and the tension members 19 are completely covered by a ribbon-shaped sheath 20 composed of PE.

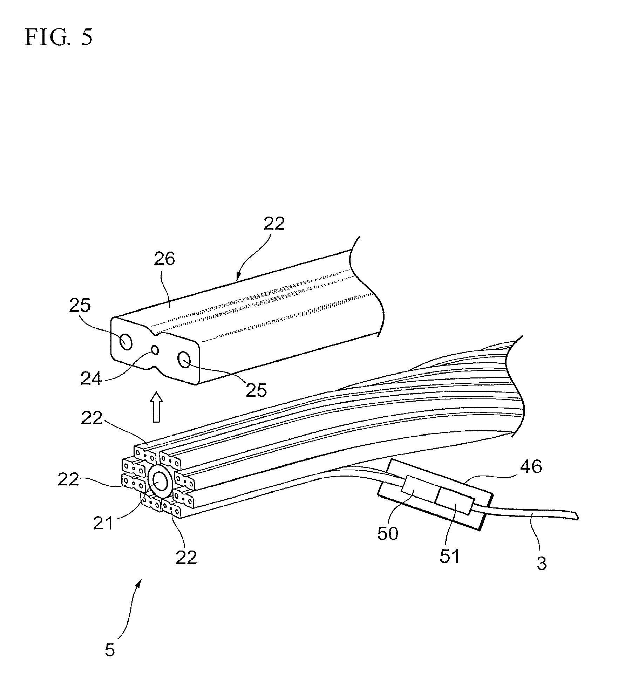

FIG. 5 is a perspective view of a sub-branch cable included in the optical access network system of the embodiment. The sub-branch cable 5 is a cable (second assembled cable) obtained by twisting together a plurality of single-fiber component cables 22 (eight in the present embodiment) around a support line 21. The single-fiber component cables 22 in the sub-branch cable 5 are in an exposed (bare) state and are not covered by a cable sheath. The single-fiber component cables 22 have a single optical fiber 24 and a pair of tension members 25 that are positioned on either side of the optical fiber 24. The optical fiber 24 and the tension members 25 are completely covered by a ribbon-shaped sheath 26 composed of PE.

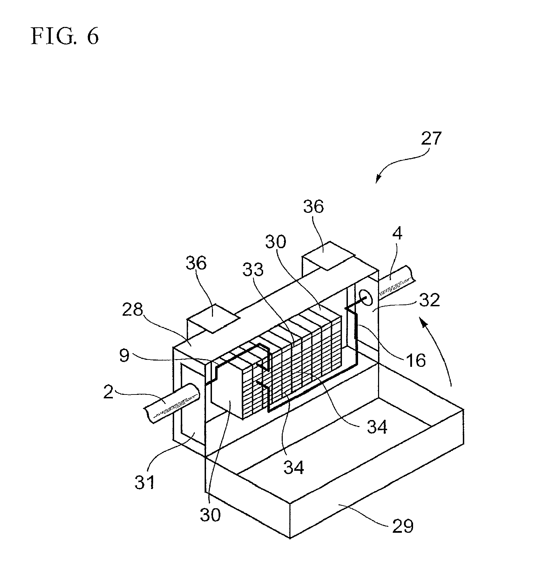

FIG. 6 is a perspective view showing the open state of a feeder point enclosure included in the optical access network system of the embodiment. The feeder point enclosure 27 has a box-shaped enclosure main body 28 and a door 29 that is openably disposed with respect to the enclosure main body 28. A plurality of connection modules 30 are arranged in the widthwise direction (the lateral direction) in an upright (vertically positioned) state within the enclosure main body 28. Specifically, each of the connection modules 30 is housed in a connection-module rack so as to be insertable and detachable from the direction of the door 29. The connection module rack (not shown) is of a front-pull format and is provided to the enclosure main body 28. The connection modules 30 housed in the connection module rack are fixed to the connection module rack using, e.g., screws, a connection board, or other means.

A cable-insertion part 31 is provided to one end of the enclosure main body 28, the cable-insertion part having a hole through which the four-fiber ribbon 9 drawn off from the feeder cable 2 is inserted. A cable-insertion part 32 is provided to the other end of the enclosure main body 28, the cable-insertion part having a hole through which the multi-fiber component cables 16 that constitute the branch cable 4 are inserted. The enclosure main body 28 is made of a plastic material, but the cable-insertion parts 31, 32 are made of rubber so as to ensure a waterproof seal.

A four-fiber MT connector 33 and a plurality of four-fiber MT connectors 34 (eight in the present embodiment) are attached to an end surface (the front surface) of each of the connection modules 30. The four-fiber ribbon 9 drawn off from the feeder cable 2 is connected to the MT connector 33. One end of each of the multi-fiber component cables 16 that constitute the branch cable 4 is connected to each of the MT connectors 34. This arrangement allows the feeder cable 2 and the multi-fiber component cables 16 to be connected in a simple and reliable manner.

The connection module 30 has an optical splitter 35 for separating a single optical input into a plurality of branched outputs (eight in the present embodiment; see FIG. 1). The input part of the optical splitter 35 is connected to the MT connector 33, and the output parts of the optical splitter 35 are connected to the respective MT connectors 34. Providing the optical splitter 35 allows the number of subscribers connected to the feeder cable 2 to be increased; therefore, the usage efficiency of the optical access network system can be improved. The optical splitter 35 may also be absent from the connection module 30 so that the number of inputs and the number of outputs are the same. The numbers of the MT connector 33 and the MT connector 34 are identical in this case.

Two hangers 36 for holding the feeder point enclosure 27 to a suspension wire (not shown) are provided to the rear surface of the enclosure main body 28. The hangers 36 may have an L-shaped plate and a flat plate and they are screwed in a manner where the suspension wire is sandwiched between them, whereby the feeder point enclosure 27 is attached to the suspension wire.

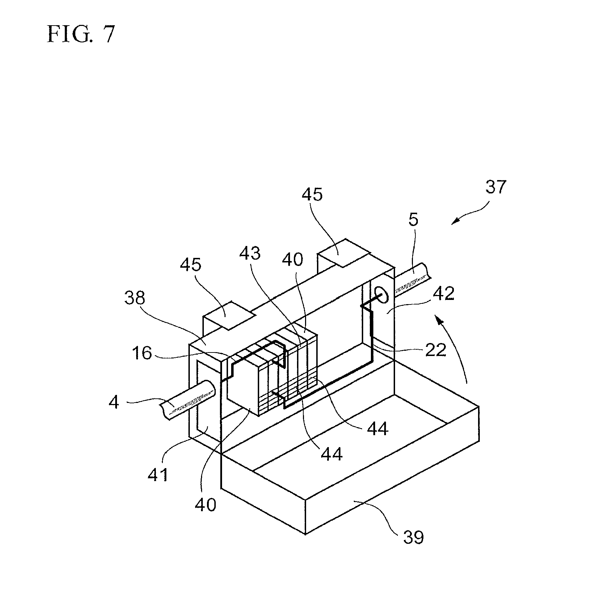

FIG. 7 is a perspective view showing the open state of a distribution enclosure included in the optical access network system of the embodiment. Like the feeder point enclosure 27, the distribution enclosure 37 has a box-shaped enclosure main body 38 and a door 39 that is openably disposed with respect to the enclosure main body 38. A plurality of connection modules 40 are arranged in the widthwise direction in a vertically positioned state within the enclosure main body 38, as in the feeder point enclosure 27.

A cable-insertion part 41 is provided to one end of the enclosure main body 38, the cable-insertion part having a hole through which the multi-fiber component cables 16 that constitute the branch cable 4 are inserted. A cable-insertion part 42 is provided to the other end of the enclosure main body 38, the cable-insertion part having a hole through which the single-fiber component cables 22 that constitute the sub-branch cable 5 are inserted. The cable-insertion parts 41, 42 are made of rubber.

One four-fiber MT connector 43 and a plurality of single-fiber connectors 44 (four in the present embodiment) are attached to an end surface (the front surface) of the connection modules 40. The other ends of the multi-fiber component cables 16 that constitute the branch cable 4 are connected to the four-fiber MT connector 43. One end of each of the single-fiber component cables 22 that constitute the sub-branch cable 5 is connected to each of the single-fiber connectors 44. Sheath-holding SC connectors, FAS connectors, or the like are used as the single-fiber connectors 44. The connection modules 40 have a functionality for converting the number of fibers so that four-fiber cables can be converted to single-fiber cables. This arrangement allows the multi-fiber component cables 16 and the single-fiber component cables 22 to be connected in a simple and reliable manner.

Two hangers 45 for holding the distribution enclosure 37 to a suspension wire (not shown) are provided to the rear surface of the enclosure main body 38. The structure of the hangers 45 is identical to the structure of the aforedescribed hangers 36.

Connecting the branch cable 4 and the sub-branch cable 5 using the distribution enclosure 37 is performed in the following manner. The necessary number of multi-fiber component cables 16 in the branch cable 4 is first unraveled, drawn off, and cut. The outer coating of the fiber ribbon 18 and the sheath 20 on the ends of these multi-fiber component cables 16 are then removed, and MT connectors are attached to the multi-fiber component cables 16. Once equipped with the MT connectors, the multi-fiber component cables 16 are then inserted into the enclosure main body 38 from the cable-insertion part 41 while the door 39 of the distribution enclosure 37 is open, and are coupled to the MT connectors 43 of the connection modules 40.

Meanwhile, the required number of single-fiber component cables 22 in the sub-branch cable 5 is unraveled, drawn off, and cut. A sheath-holding single-fiber connectors which are of the same type of the single-fiber connector 44 are then attached to the tip parts of the cut single-fiber component cables 22. The single-fiber component cables 22 equipped with the single-fiber connectors are then inserted into the enclosure main body 38 from the cable-insertion part 42 while the door 39 of the distribution enclosure 37 is open, and are coupled to the single-fiber connectors 44 of the connection modules 40. The branch cable 4 and the sub-branch cable 5 are thereby connected via the connection modules 40.

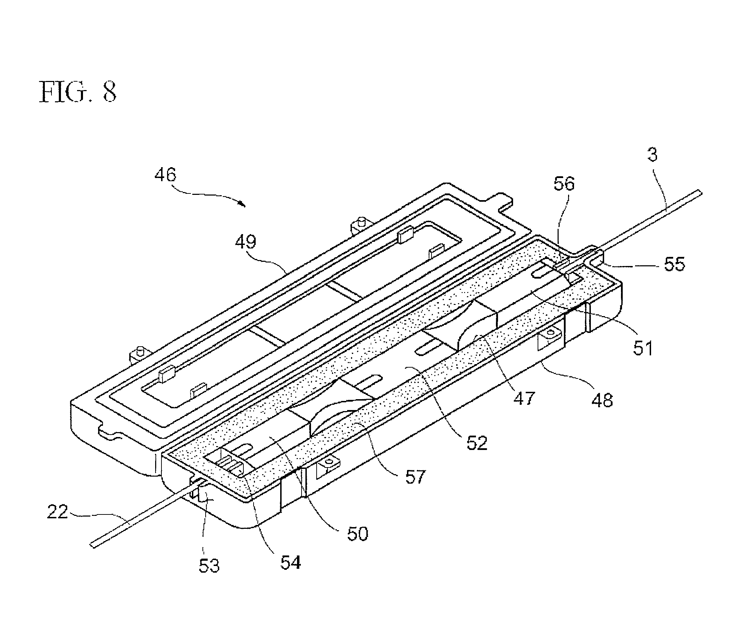

FIG. 8 is a perspective view showing the open state of a dropping enclosure included in the optical access network system of the embodiment. The dropping enclosure 46, also called a connector sleeve, has a substantially box-shaped enclosure main body 48, which has a connector housing part 47; and a lid 49 that is openably disposed with respect to the enclosure main body 48. A single-fiber connector 50 attached to the other end of the single-fiber component cable 22 and a single-fiber connector 51 attached to the end of the drop cable 3 are housed in the connector housing part 47 of the enclosure main body 48 so as to sandwich an adapter 52.

A cable-insertion part 53 for inserting the single-fiber component cable 22 into the enclosure main body 48 and a cable-fixing part 54 for immobilizing the single-fiber component cable 22 are provided to one end of the enclosure main body 48. The cable-fixing part 54 has a pair of blade parts that sandwich the sheath 26 of the single-fiber component cable 22 and secures the single-fiber component cable 22 to the enclosure main body 48. A cable-insertion part 55 for inserting the drop cable 3 into the enclosure main body 48 and a cable-fixing part 56 for immobilizing the drop cable 3 are provided to the other end of the enclosure main body 48. The cable-fixing part 56 has a pair of blade parts that sandwich the sheath 14 of the drop cable 3 and secures the drop cable 3 to the enclosure main body 48 in the same manner as the cable-fixing part 54. A rubber seal material 57 is positioned within the enclosure main body 48 so as to completely surround the periphery of the connector housing part 47.

Connecting the sub-branch cable 5 and the drop cable 3 using the dropping enclosure 46 is performed in the following manner. The single-fiber component cable 22 that is a constituent of the sub-branch cable 5 is first unraveled, drawn off, and cut at a location on the sub-branch cable 5 relatively close to the subscriber home. The single-fiber component cable 22 is then inserted into the enclosure main body 48 from the cable-insertion part 53 while the lid 49 of the distribution enclosure 46 is open, and the single-fiber connector 50 is attached to the end of the single-fiber component cable 22. The drop cable 3 is inserted into the enclosure main body 48 from the cable-insertion part 55, and the single-fiber connector 51 is attached to the end of the drop cable 3.

In addition to being coupled to the single-fiber connectors 50, 51 via the adapter 52, the single-fiber component cable 22 is fixed to the cable-fixing part 54, and the drop cable 3 is fixed to the cable-fixing part 56. The single-fiber connectors 50, 51 and the adapter 52 are housed in the connector housing part 47 of the enclosure main body 48 in this state. The sub-branch cable 5 and the drop cable 3 are thereby connected via the single-fiber connectors 50, 51 and the adapter 52.

The dropping enclosure 46 thus serves only to connect one of the single-fiber component cables 22 to one of the drop cables 3 using the single-fiber connectors 50, 51 and the adapter 52. The dropping enclosure 46 can therefore be significantly reduced in size.

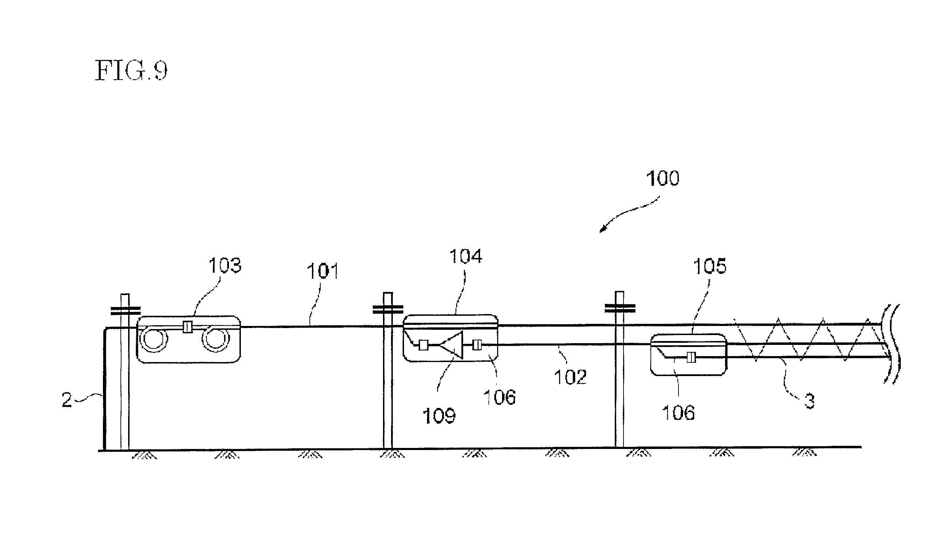

FIG. 9 is a conceptual diagram showing an example of a conventional optical access network system. An optical access network system 100 is provided with a branch cable 101, a sub-branch cable 102, a feeder point enclosure 103, a distribution enclosure 104, and a dropping enclosure 105. The branch cable 101 is connected to a feeder cable at the feeder point enclosure 103. The branch cable 101 and the sub-branch cable 102 form a branch connection at the distribution enclosure 104. The sub-branch cable 102 and the drop cable 3 form a branch connection at the dropping enclosure 105. The branch cable 101 has the same round structure as the feeder cable 2 (FIG. 2).

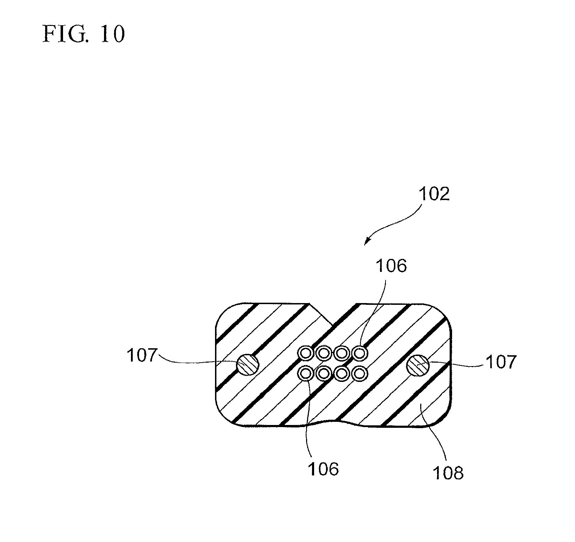

FIG. 10 is a cross-sectional view of a sub-branch cable included in a conventional optical access network system. The sub-branch cable 102 is provided with a plurality of single optical fibers 106 (eight in the present prior art example) and a pair of tension members 107 positioned on both sides of the optical fibers 106. The optical fibers 106 are arranged in two levels. The optical fibers 106 and the tension members 107 are all covered by a sheath 108.

The feeder point enclosure 103 uses MT connectors to connect the four-fiber ribbon 9 of the feeder cable 2 and the four-fiber ribbon of the branch cable 101. The distribution enclosure 104 has an optical splitter 109 (FIG. 9) and uses single-fiber connectors to connect a single optical fiber branched off at an intermediate location from the four-fiber ribbon of the branch cable 101 and each of the optical fibers 106 of the sub-branch cable 102 via the optical splitter 109. The dropping enclosure 105 uses a single-fiber connector to connect one of the optical fibers 106 branched off at an intermediate location from the sub-branch cable 102 and the drop cable 3.

In the optical access network system 100, connecting the branch cable 101 and the sub-branch cable 102 using the distribution enclosure 104 is performed in the following manner. The cable sheath at the location to be branched off on the branch cable 101 is first peeled off, and the four-fiber ribbon is withdrawn from the slot. The coating on the end of the four-fiber ribbon is removed, and the optical fibers are exposed and cut. Single-fiber connectors are then attached to the ends of the optical fibers, and the optical fibers and the input part of the optical splitter 109 are connected. Meanwhile, the sheath 108 of the sub-branch cable 102 is removed, and the eight optical fibers 106 are separated from each other. Single-fiber connectors are attached to the ends of each of the optical fibers 106. The optical fibers 106 and the output parts of the optical splitter 109 are then connected.

Connecting the sub-branch cable 102 and the drop cable 3 using the drop enclosure 105 is performed in the following manner. The sheath 108 at the location to be branched off on the sub-branch cable 102 is first removed, and the eight optical fibers 106 are separated from each other and cut. Single-fiber connectors are then attached to the ends of the optical fibers 106. Meanwhile, a single-fiber connector is attached to the end of the drop cable 3. The optical fibers 106 and the drop cable 3 are then connected.

The branch cable 101 in the optical access network system 100 is a round optical cable obtained by using a cable sheath to cover a plurality of internal optical fibers (branch fiber ribbons). The cable sheath of the branch cable 101 must therefore be peeled off at the connection point and the necessary number of fiber ribbons must be withdrawn whenever the branch cable 101 and one of the sub-branch cables 102 are connected. A great deal of labor is required of the worker, and other fiber ribbons may be damaged when the worker is not accustomed to handling optical cables and fiber ribbons. The worker must therefore work with proper care. A significant amount of time is therefore required for the operation of connecting cables.

The connection between the sub-branch cable 102 and the drop cable 3 also requires removing the sheath 108 of the sub-branch cable 102 and exposing the optical fibers 106 for each fiber, and is therefore labor-intensive. The handling of the single optical fibers is extremely difficult, and the optical fibers may be broken unless the worker is highly skilled. Furthermore, depending on the area, the plurality of subscriber homes will not necessarily be close together but may also be well separated. The dropping enclosure 105 must be installed in a location that allows many subscriber homes to be covered (collected), and therefore the drop cable 3 must be laid in parallel along the branch cable 101 or the sub-branch cable 102 for the necessary distance. Wiring the optical cable is therefore labor intensive, and ultimately a large amount of time is required for the operation.

By contrast, in the present embodiment, an exposed cable (first assembled cable) in which a plurality of the multi-fiber component cables 16 are twisted together is used as the branch cable 4. When connecting the branch cable 4 to the feeder point enclosure 27 and the distribution enclosure 37, a connection may thereby be simply established for each of the multi-fiber component cables composed of an operational unit of optical fibers, and the cable sheath need not be peeled off each time. An exposed cable (second assembled cable) in which a plurality of the single-fiber component cables 22 are intertwined and assembled is used as the sub-branch cable 5, and the sub-branch cable 5 and the distribution enclosure 37 are connected using sheath-holding single-fiber connectors. Connection may thereby be simply performed for each of the single-fiber component cables composed of an operational unit of optical fibers, and an operation for removing the sheath 26 of the sub-branch cable 5 and exposing the optical fibers 24 is not necessary.

Connection may thus be performed for each component cable composed of an operational unit of optical fibers when connecting the optical cables in the present embodiment. It is thereby possible to connect the optical cables more readily than in the prior art. The time required for connecting the optical cables can therefore be shortened, and construction expenditures can be reduced. The fiber ribbons and optical fibers are readily handled by the worker; therefore, damage and breakage of the other fiber ribbons and optical fibers can be prevented.

The connection of the sub-branch cable 5 and the drop cable 3 is performed for each drop cable using the small-sized dropping enclosure 46, which is a connector sleeve. The sub-branch cable 5 and the drop cable 3 can thereby be readily connected at the desired location relatively close to the home of each subscriber, as shown in FIG. 1, even when the plurality of subscriber homes are not close together. The drop cable 3 therefore need not be laid in parallel along the branch cable 4 and the sub-branch cable 5; therefore, the wiring of the optical cables is simple, and the time required for the operation of wiring the optical cables can be shortened.

According to the embodiment above, the work involved in wiring and connecting aerial optical cables is facilitated; therefore, the total cost of installation work for the optical cables can be reduced.

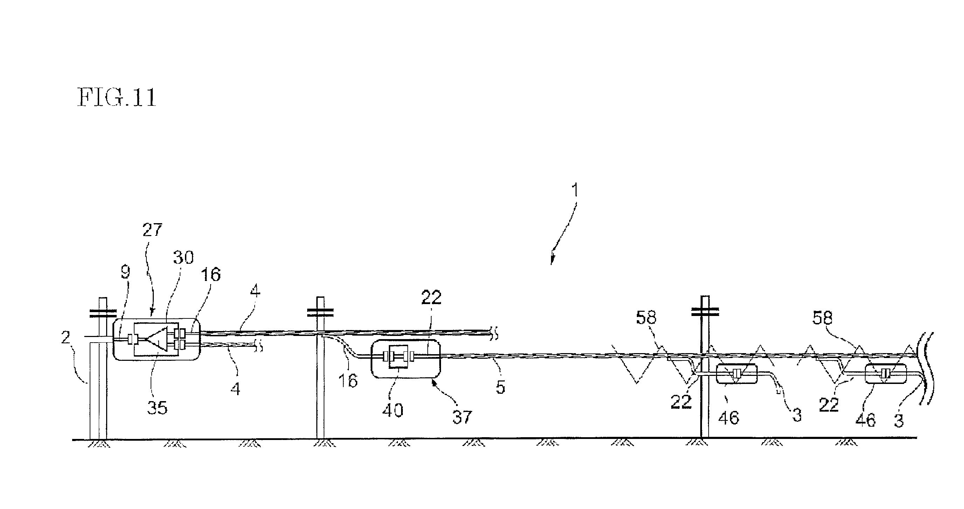

The present invention is not limited to the aforedescribed embodiment. FIG. 11 is a conceptual diagram showing a modified example of the optical access network system according to the present invention. In the present embodiment, one end of the branch cable 4 and one end of the sub-branch cable 5 are connected via the distribution enclosure 37, but in the modified example, only one of the multi-fiber component cables 16 drawn from the branch cable 4 (first assembled cable) is connected to the sub-branch cable 5 via the distribution enclosure 37 (the branch cable 4 and the sub-branch cable form a branch connection).

The number of fibers in the multi-fiber component cables 16 of the branch cable 4 is not particularly limited to four and, where appropriate, may be the same as the number of fibers in the multi-fiber ribbons contained in the feeder cable 2. The first assembled cable and the second assembled cable that are used are not particularly limited to exposed cables in which a plurality of component cables are intertwined and assembled; e.g., assembled cables in which a plurality of component cables are assembled in parallel, or assembled cables in which a plurality of assembled component cables are covered by a protecting part in which a slit is formed for drawing out the component cables may also be used.

In the optical access network system 1 of the embodiment above, two types of connecting optical cables; i.e., the branch cable 4 and the sub-branch cable 5, are used to make a connection between the central-office-side feeder cable 2, which contains multi-fiber ribbons, and the subscriber-side drop cable 3; however, this aspect is not given by way of limitation. The main point is that, according to the present invention, any cable system employing assembled cables in which a plurality of component cables comprising an operational unit of optical fibers are assembled can be used as connecting optical cables for connecting the central-office optical cable and the subscriber optical cables.

### Industrial Applicability

The optical access network system of the present invention is useful as an optical access network between a central-office optical cable and subscriber optical cables.

## Claims

1. An optical access network system for making a connection between a central-office optical cable and one or a plurality of subscriber optical cables; the optical access network system comprising:
a connecting optical cable configured to form a connection with the one or plurality of subscriber optical cables, the connecting optical cable being obtained by assembling together a plurality of component cables having the same number of fibers as the one or plurality of subscriber optical cables.

2. The optical access network system according to claim 1, further comprising a subscriber enclosure to connect one of the subscriber cables from among the one or plurality of subscriber optical cables and one of the component cables from among the plurality of component cables of the connecting cable.

3. The optical access network system according to claim 2, wherein
the connecting optical cable is a cable obtained by assembling together a plurality of single-fiber component cables, the optical access network system further comprising a first assembled cable between the central-office optical cable and the connecting optical cable, the first assembled cable is obtained by assembling together a plurality of multi-fiber component cables.

4. The optical access network system according to claim 2, further comprising an intermediate enclosure to connect the multi-fiber component cables of the first assembled cable and the single-fiber component cables of the connecting optical cable and
a central-office enclosure to connect the central-office optical cable and the multi-fiber component cables of the first assembled cable.

5. The optical access network system according to claim 3, wherein
the multi-fiber component cables are connected to each of an intermediate enclosure and a central-office enclosure and
the single-fiber component cables are connected to each of the intermediate enclosure and the subscriber enclosure.
